# EUROPÄISCHE PATENTSCHRIFT

(11) **EP 4 606 007 B1**
(45) Veröffentlichungstag und Bekanntmachung des Hinweises auf die Patenterteilung: **14.10.2026**
(21) Anmeldenummer: 23828358.4
(22) Anmeldetag: 05.12.2023
(51) Int. Cl.: H02H 7/122, H02J 1/12, H02H 7/26

(54) **STROMRICHTERANORDNUNG MIT GLEICHSPANNUNGSZWISCHENKREIS**
CONVERTER ARRANGEMENT WITH DC VOLTAGE INTERMEDIATE CIRCUIT
DISPOSITIF CONVERTISSEUR DE COURANT AVEC CIRCUIT INTERMÉDIAIRE À TENSION CONTINUE

(30) Priorität: 11.01.2023 EP 23151158
(43) Veröffentlichungstag der Anmeldung: 27.08.2025
(73) Patentinhaber: Siemens Aktiengesellschaft, 80333 München (DE)
(72) Erfinder: WEIS, Benno, 91334 Hemhofen (DE)
(74) Vertreter: Siemens Patent Attorneys
(86) Internationale Anmeldenummer: PCT/EP2023/084286
(87) Internationale Veröffentlichungsnummer: WO 2024/149523

(56) Entgegenhaltungen:
- EP-A1- 3 734 783
- CN-A- 112 564 061
- DE-T5- 112017 003 081
- US-A1- 2020 083 717

## Beschreibung

Die vorliegende Erfindung betrifft eine Stromrichteranordnung, umfassend einen Gleichspannungszwischenkreis mit einer ersten Phase und einer zweiten Phase sowie eine Mehrzahl von Stromrichtern, welche jeweils einzeln zwischen der ersten Phase und der zweiten Phase verschaltet sind, so dass den einzelnen Stromrichtern jeweils ein separates Paar von Anschlussknoten zugeordnet ist.

Aus dem Stand der Technik sind verschiedene Stromrichteranordnungen mit Gleichspannungszwischenkreisen bekannt, vor allem im Bereich der Frequenzumrichter, bei denen mehrere Wechselrichter an einem gemeinsamen Gleichspannungszwischenkreis betrieben werden. Diese einzelnen Wechselrichter können mehrere Verbraucher mit einer Wechselspannung elektrisch versorgen. Dabei ist es allgemein wünschenswert, die einzelnen Wechselrichter getrennt abzusichern, so dass bei einem Fehlerfall in einem einzelnen Wechselrichter der betroffene Zweig zwischen den zugehörigen Anschlussknoten separat vom Gleichspannungszwischenkreis getrennt werden kann, wobei die anderen Wechselrichter und die zugehörigen Verbraucher weiter funktionsbereit bleiben. Hierzu werden bei bekannten Anordnungen typischerweise separate Sicherungen in den einzelnen Zweigen vorgesehen.

Weiterhin werden nach dem Stand der Technik typischerweise sogenannte Zwischenkreiskondensatoren in den einzelnen Zweigen des Gleichspannungszwischenkreises vorgesehen, um die Gleichspannung zu glätten und starke Spannungsschwankungen zu vermeiden. Diese Zwischenkreiskondensatoren werden innerhalb der einzelnen Zweige den Wechselrichten parallelgeschaltet, so dass jeweils ein Pufferkreis gebildet ist, der sich über den Wechselrichter und den zugehörigen Zwischenkreiskondensator erstreckt. Bei den herkömmlichen Anordnungen werden die Sicherungen der einzelnen Zweige außerhalb dieser Pufferkreise angeordnet, so dass also der Anschlusspunkt für den jeweiligen Zwischenkreiskondensator auf der dem Wechselrichter zugewandten Seite der jeweiligen Sicherung liegt. Dies hat den Vorteil, dass die Induktivität innerhalb des jeweiligen Pufferkreises sehr gering gehalten werden kann. Die Begrenzung der Induktivitäten innerhalb der Pufferkreise ist allgemein wünschenswert, um das Auftreten von zu hohen Spannungsspitzen aufgrund der Schaltvorgänge in den Wechselrichtern zu vermeiden.

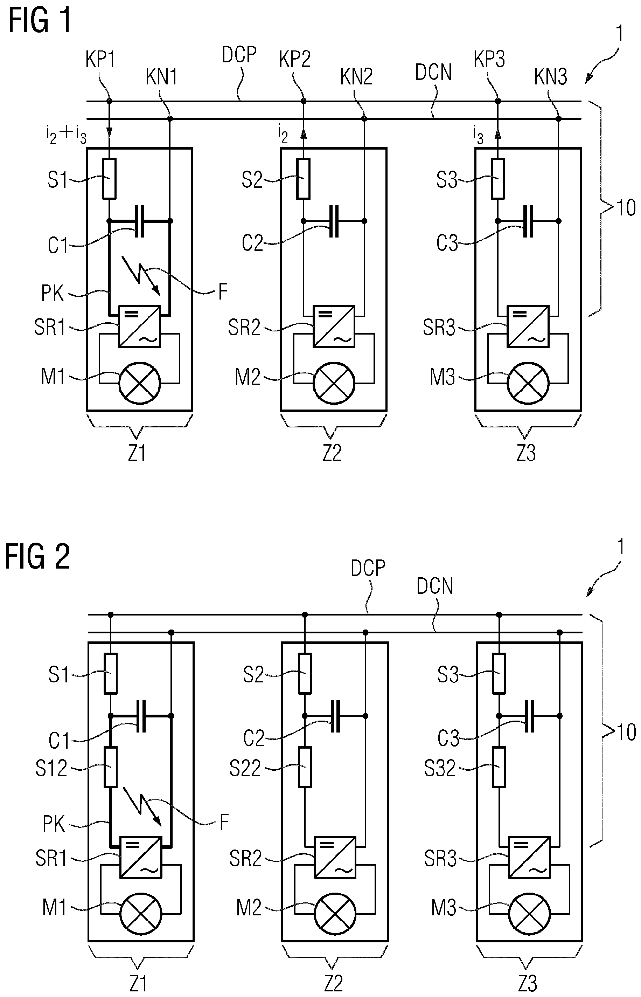

Nachteilig bei den bekannten Stromrichteranordnungen ist jedoch, dass bei einem Kurzschluss innerhalb eines Zweiges nicht nur die zugehörige Sicherung, sondern auch die Sicherung von ein oder mehreren anderen Zweigen auslösen kann. So kann es bei einem Fehlerfall in einem Zweig auch zu einer Vorschädigung der Sicherungen in den benachbarten Zweigen kommen, die von dem Fehler gar nicht betroffen sind. Dieses Problem wird weiter unten im Zusammenhang mit Figur 1 ausführlicher beschrieben. Besonders gravierend ist dieser Nachteil, wenn innerhalb einer Stromrichteranordnung Verbraucher mit stark unterschiedlichen Nennleistungen zum Einsatz kommen. Eine Konsequenz daraus ist, dass bei herkömmlichen Stromrichteranordnungen meist nur Wechselrichter und Verbraucher mit ähnlichen Nennleistungen an einem gemeinsamen Gleichspannungszwischenkreis betrieben werden. Dies führt jedoch zu starken Einschränkungen in der Auslegung der Anordnungen.

Aus der EP 3 734 783 A1 ist ein Gleichspannungs-Bus mit mehreren Wechselrichtern in separaten Zweigen bekannt, wobei jeder Zweig einen Kondensator aufweist, der mit dem jeweiligen Wechselrichter einen Pufferkreis ausbildet. Außerhalb des jeweiligen Pufferkreises weist jeder Zweig eine Sicherung und einen dazu parallelgeschalteten Spannungssensor auf.

Aus der DE 11 2017 003081 T5 ist ebenfalls eine DC-Schaltung mit mehreren parallelen Zweigen bekannt, wobei in jedem Zweig ein Kondensator angeordnet ist, der mit einer zugehörigen Last einen Pufferkreis ausbildet. Innerhalb des jeweiligen Pufferkreises weist jeder Zweig einen Schalter und einen Stromsensor auf, so dass im Fall einer Fehlfunktion durch einen Lichtbogen der betroffene Zweig getrennt werden kann.

Aufgabe der Erfindung ist es, eine Stromrichteranordnung anzugeben, welche die genannten Nachteile überwindet. Insbesondere soll eine Stromrichteranordnung zur Verfügung gestellt werden, welche eine separate Absicherung der einzelnen Stromrichter und Verbraucher ermöglicht, wobei die Gefahr der Vorschädigung benachbarter Sicherungen wirksam reduziert ist.

Diese Aufgabe wird durch die in Anspruch 1 beschriebene Stromrichteranordnung gelöst. Die erfindungsgemäße Stromrichteranordnung umfasst einen Gleichspannungszwischenkreis mit einer ersten Phase und einer zweiten Phase. Ferner umfasst sie eine Mehrzahl von Stromrichtern, welche jeweils einzeln zwischen der ersten Phase und der zweiten Phase verschaltet sind, so dass den einzelnen Stromrichtern jeweils ein separates Paar von Anschlussknoten zugeordnet ist. Weiterhin umfasst sie wenigstens einen ersten Zwischenkreiskondensator, welcher zwischen der ersten Phase und der zweiten Phase verschaltet ist, so dass die Stromrichter jeweils mit einem ersten Zwischenkreiskondensator einen Pufferkreis ausbilden. Außerdem umfasst sie zu jedem Stromrichter eine zugeordnete erste Sicherung, welche innerhalb des dem jeweiligen Stromrichter zugeordneten Pufferkreises in Serie mit dem jeweiligen Stromrichter verschaltet ist. Die Stromrichteranordnung umfasst für die einzelnen Stromrichter jeweils einen zugeordneten zweiten Zwischenkreiskondensator. Dieser ist innerhalb des zugeordneten Pufferkreises dem jeweiligen Stromrichter parallelgeschaltet. Dabei sind die zweiten Zwischenkreiskondensatoren jeweils über zwei zugehörige Anschlussknoten verbunden, von denen einer zwischen der ersten Sicherung und dem Stromrichter angeordnet ist.

Durch die separaten Anschlussknoten werden also einzelne Zweige gebildet, in denen die Stromrichter jeweils einzeln mit dem Gleichspannungszwischenkreis verknüpft sind. Die Stromrichter sind untereinander elektrisch parallelgeschaltet. Über die den einzelnen Stromrichtern zugeordneten ersten Sicherungen sind die einzelnen Zweige separat abgesichert. Dazu sind die einzelnen Sicherungen zweckmäßig innerhalb der jeweiligen Zweige verschaltet. Der wenigstens eine erste Zwischenkreiskondensator dient zur Pufferung von Ladungen und damit zur Glättung der Gleichspannung innerhalb des Gleichspannungszwischenkreises. Hierbei sind mehrere Varianten möglich, wie weiter unten noch ausführlicher beschrieben wird. So kann beispielsweise in jedem Zweig ein separater erster Zwischenkreiskondensator vorliegen, durch den die Gleichspannung im zugehörigen Zweig separat geglättet wird. Bei dieser Variante ist in jedem Zweig ein separater Pufferkreis ausgebildet. Alternativ kann aber auch ein übergeordneter erster Zwischenkreiskondensator vorliegen, welcher zur Glättung der Gleichspannung in mehreren Zweigen vorgesehen ist. Auch in diesem Fall ist jedem Zweig ein Pufferkreis zugeordnet, der aber dann nicht auf den jeweiligen Zweig begrenzt ist, sondern über Teile des jeweiligen Zweigs und den außenliegenden übergeordneten ersten Zwischenkreiskondensator erstreckt. In jedem Fall soll unter dem sogenannten "Pufferkreis" derjenige Stromkreis verstanden werden, der durch den jeweiligen Stromrichter und den zugehörigen, die Ladung puffernden ersten Zwischenkreiskondensator gebildet wird, und über den mittels Ladungsausgleich aus dem Zwischenkreiskondensator die Gleichspannung geglättet wird. Bei Ausführungsformen, bei denen dem jeweiligen Stromrichter mehrere Zwischenkreiskondensatoren zugeordnet sind, soll unter dem sogenannten "Pufferkreis" derjenige Stromkreis verstanden werden, der durch den betroffenen Stromrichter und den jeweils größten vorliegenden Zwischenkreiskondensator gebildet wird. Optional vorhandene weitere Zwischenkreiskondensatoren dienen dann nämlich nicht vorrangig zur Glättung der Gleichspannung, sondern erfüllen andere Funktionen. Mit anderen Worten soll der erste Zwischenkreiskondensator für einen bestimmten Zweig immer der Kondensator mit der größten Kapazität sein, welcher die Ladungen für diesen Zweig ausgleicht, und der Pufferkreis erstreckt sich entsprechend über diesen größten Zwischenkreiskondensator.

Wesentlich im Zusammenhang mit der vorliegenden Erfindung ist, dass die dem jeweiligen Stromrichter zugeordnete erste Sicherung innerhalb des zugehörigen Pufferkreises liegt. Der Vorteil hiervon ist, dass durch diese Anordnung eine Vorschädigung von Sicherungen durch einen Fehlerfall in einem benachbarten Zweig wirksam vermieden wird. Um Unterschied zu den beschriebenen herkömmlichen Stromrichteranordnungen wird hierbei in Kauf genommen, dass durch die ersten Sicherungen ein zusätzlicher Beitrag zur Induktivität innerhalb des jeweiligen Pufferkreises entsteht. Dies kann zu höheren Überspannungen beim Schalten des zugehörigen Stromrichters führen. Um diesem Problem entgegenzuwirken, können entweder die einzelnen Bauteile robuster gegenüber solchen Überspannungen ausgeführt werden oder aber es können optional weitere Maßnahmen zur Reduzierung der Überspannungen ergriffen werden.

Der Erfindung liegt also die Erkenntnis zugrunde, dass der Vorteil der beschriebenen Anordnung in Bezug auf die zuverlässige separate Absicherung der einzelnen Zweige die Einführung der ersten Sicherungen als zusätzliche Bauteile innerhalb der jeweiligen Pufferkreise rechtfertigen kann. Insbesondere überwiegen die Vorteile der getrennten Absicherung die Nachteile der zusätzlichen Induktivität vor allem in solchen Fällen, in denen die einzelnen Stromrichter und die zugehörigen Verbraucher stark unterschiedliche Nennleistungen aufweisen. Bei den herkömmlichen Anordnungen sind große Unterschiede in den Nennleistungen häufig nicht realisierbar, ohne dass bei einem Fehlerfall die Gefahr einer Schädigung der Sicherungen in benachbarten Zweigen bestehen würde.

Die erste Sicherung des jeweiligen Zweiges liegt zwischen dem zugehörigen ersten und zweiten Zwischenkreiskondensator. Durch den Stromrichter und den ersten Zwischenkreiskondensator wird der bereits beschriebene Pufferkreis ausgebildet. Entsprechend bildet der Stromrichter mit dem zweiten Zwischenkreiskondensator einen sogenannten Kommutierungskreis aus. Der jeweilige erste Zwischenkreiskondensator dient der Glättung der Gleichspannung, während der jeweilige zweite Zwischenkreiskondensator der Verringerung der kurzzeitigen Überspannungen bei den Schaltvorgängen dient.

Vorteilhafte Ausgestaltungen und Weiterbildungen der Erfindung gehen aus den von Anspruch 1 abhängigen Ansprüchen sowie der folgenden Beschreibung hervor.

So kann die Stromrichteranordnung gemäß einer vorteilhaften Ausführungsform eine Frequenzumrichteranordnung sein, wobei die einzelnen Stromrichter jeweils als Wechselrichter ausgebildet sind. Bei solchen Frequenzumrichteranordnungen besteht häufig die Anforderung, dass mehrere Verbraucher mit Wechselrichtern an einem gemeinsamen Gleichspannungszwischenkreis betrieben werden sollen. Der gemeinsame Gleichspannungszwischenkreis kann dann über eine übergeordnete Netzeinspeisung aus einem Wechselspannungsnetz gespeist werden. Dabei besteht häufig die Anforderung, die einzelnen Zweige mit den jeweiligen Wechselrichtern separat abzusichern, und es kann wünschenswert sein, Wechselrichter bzw. Verbraucher mit unterschiedlichen Nennleistungen an dem gemeinsamen Gleichspannungszwischenkreis zu betreiben. Gerade bei solchen Anwendungen kommen die Vorteile der Erfindung besonders zum Tragen.

Alternativ können die einzelnen Stromrichter der Stromrichteranordnung aber auch als Gleichspannungswandler ausgebildet sein. Sie können insbesondere dazu dienen, einzelne Verbraucher aus einem gemeinsamen Gleichspannungszwischenkreis mit einer jeweils auf den Verbraucher angepassten Gleichspannung zu versorgen.

Gemäß einer weiteren Alternative kann die Stromrichteranordnung auch beispielsweise als unterbrechungsfreie Stromversorgung für eine Mehrzahl von Verbrauchern ausgebildet sein. Allgemein ist eine Vielzahl von Anwendungen möglich. Wesentlich ist im Zusammenhang mit der vorliegenden Erfindung nur, dass eine Mehrzahl von Stromrichtern (also z.B. von Wechselrichtern oder Gleichspannungswandlern) durch einen gemeinsamen Gleichspannungszwischenkreis versorgt wird.

Gemäß einer allgemein vorteilhaften Ausführungsform weisen die den jeweiligen Stromrichtern zugeordneten ersten Sicherungen jeweils eine Auslöseschwelle auf, wobei sich zumindest zwei der vorliegenden ersten Sicherungen bezüglich ihrer Auslöseschwelle um wenigstens einen Faktor fünf unterscheiden können. Eine derart unterschiedliche Auslöseschwelle ist vor allem dann zweckmäßig, wenn auch die Nennleistungen der optional vorhandenen Verbraucher, die von den Stromrichtern versorgt werden können, entsprechend unterschiedlich sind. Die erfindungsgemäße Anordnung der ersten Sicherungen innerhalb des jeweiligen Pufferkreises ermöglicht nämlich eine zuverlässige, getrennte Absicherung der einzelnen Zweige, auch wenn die Nennleistungen für diese Zweige weit auseinanderliegen. So entsteht ein wesentlich höherer Gestaltungsspielraum bei der Auslegung einer übergeordneten Anlage als es nach dem Stand der Technik möglich wäre.

Allgemein kann der jeweilige Stromrichter mit einem zugeordneten elektrischen Verbraucher verschaltbar oder verschaltet sein, wobei jeder Verbraucher durch einen Bemessungsstrom charakterisiert ist. Dabei kann insbesondere die jeweilige erste Sicherung eine Auslöseschwelle aufweisen, welche in einem Bereich zwischen einem 1,1-fachen und einem 1,5-fachen des Bemessungsstroms des zugeordneten Verbrauchers liegt. Mit anderen Worten ist die jeweilige erste Sicherung auf den Bemessungsstrom des zugehörigen Verbrauchers dimensioniert und kann besonders vorteilhaft etwa 30% oberhalb von dessen Bemessungsstrom liegen, um bei einem Fehlerfall zuverlässig auszulösen. Bei dieser Ausführungsform kommen die Vorteile der Erfindung wiederum dann besonders zum Tragen, wenn sich zumindest zwei der Verbraucher bezüglich ihrer Bemessungsströme um wenigstens einen Faktor 5 unterscheiden. Dies wäre bei herkömmlichen Anordnungen schwer umzusetzen, ohne dass die Gefahr besteht, dass bei einem Fehlerfall in einem ausgewählten Zweig die Sicherungen der anderen Zweige ebenfalls geschädigt werden.

Allgemein kann es sich bei den Verbrauchern beispielsweise um elektrische Maschinen, insbesondere um Antriebsmotoren in einer industriellen Anlage handeln.

Gemäß einer ersten vorteilhaften Ausführungsvariante für die Zwischenkreiskondensatoren kann den einzelnen Stromrichtern jeweils ein separater erster Zwischenkreiskondensator zugeordnet sein, so dass durch den jeweiligen Stromrichter und den zugeordneten Zwischenkreiskondensator ein eigenständiger Pufferkreis ausgebildet ist, der insbesondere vollständig in dem zugehörigen Zweig liegt. Diese eigenständigen Pufferkreise erstrecken sich entsprechend nicht über ihre zugehörigen Anschlussknoten hinweg. Oder anders ausgedrückt ist dann der jeweilige erste Zwischenkreiskondensator über dieselben beiden Anschlussknoten mit dem Gleichspannungszwischenkreis verbunden wie der zugehörige Stromrichter. Damit besteht auch kein Überlappen zwischen den einzelnen Pufferkreisen, die den einzelnen Stromrichtern zugeordnet sind, sondern sie sind räumlich vollständig voneinander separiert. Der Vorteil dieser Ausführungsform ist, dass die einzelnen Zweige auch elektrisch weitgehend voneinander separiert sind und dass insbesondere im Fehlerfall nur eine geringe elektrische Wechselwirkung von einem vom Fehler betroffenen Zweig in die benachbarten Zweige stattfindet.

Gemäß einer alternativen vorteilhaften Ausführungsvariante umfasst die Stromrichteranordnung einen übergeordneten ersten Zwischenkreiskondensator, der über separate Anschlussknoten zwischen der ersten Phase und der zweiten Phase verschaltet ist. Dieser übergeordnete Zwischenkreiskondensator dient also dazu, die Gleichspannung in mehreren Zweigen und somit für mehrere Stromrichter zu glätten. Entsprechend erstreckt sich dann für jeden dieser Stromrichter der zugehörige Pufferkreis nicht nur über den zugehörigen Zweig, sondern auch über den gemeinsamen ersten Zwischenkreiskondensator. Dadurch überlappen sich die einzelnen Pufferkreise räumlich und schließen jeweils den gemeinsam genutzten ersten Zwischenkreiskondensator ein. Die Dimensionierung des übergeordneten ersten Zwischenkreiskondensators ist zweckmäßig so, dass damit die Gleichspannung für alle Zweige ausreichend geglättet werden kann. Beispielsweise kann für dessen Kapazität ein Wert gewählt werden, der in etwa der Summe der einzelnen Kapazitäten entspricht, die für die separaten Zwischenkreiskondensatoren der vorab beschriebenen Ausführungsform gewählt werden würden. Ein Vorteil der Ausführungsvariante mit einem gemeinsamen, übergeordneten Zwischenkreiskondensator liegt darin, dass insgesamt weniger Bauteile benötigt werden und damit auch weniger Anschlüsse benötigt werden und eine platzsparendere Schaltung realisiert werden kann.

Gemäß einer allgemein vorteilhaften Ausführungsform für die Anordnung der Sicherungen kann die Stromrichteranordnung ein oder mehrere zweite Sicherungen umfassen, welche außerhalb der einzelnen Pufferkreise angeordnet sind. Diese zusätzlichen Sicherungen entsprechen den Sicherungen in den aus dem Stand der Technik bekannten Stromrichteranordnungen. In der erfindungsgemäßen Ausführung sind sie optional. Sofern sie vorhanden sind, dienen sie dem Schutz der jeweiligen ersten Zwischenkreiskondensatoren bei einem Fehler im übergeordneten Gleichspannungszwischenkreis oder dem Abtrennen des Zweiges vom übergeordneten Gleichspannungszwischenkreis bei einem Kurzschluss in einem ersten Zwischenkreiskondensator. So ist es zweckmäßig, wenn bei einer Ausführungsvariante mit einem einzelnen ersten Zwischenkreiskondensator für jeden Zweig auch eine separate zweite Sicherung pro Zweig vorliegt, um diesen abzusichern. Ganz allgemein kann zu jedem Stromrichter eine zugeordnete zweite Sicherung vorliegen, welche elektrisch zwischen dem zugehörigen Pufferkreis und einem der beiden zugehörigen Anschlussknoten verschaltet ist.

Bei einer Ausführungsform mit einem übergeordneten ersten Zwischenkreiskondensator für alle Zweige ist es dagegen ausreichend, wenn eine übergeordnete zweite Sicherung zu dessen Absicherung vorliegt. So kann die Stromrichteranordnung eine übergeordnete Netzeinspeisung und eine übergeordnete zweite Sicherung aufweisen, welche elektrisch zwischen der Gesamtheit der Anschlussknoten der Stromrichter und der übergeordneten Netzeinspeisung verschaltet ist.

Allgemein und unabhängig von der Anordnung und Anzahl der zweiten Sicherungen ist es vorteilhaft, wenn die wenigstens eine zweite Sicherung eine Auslöseschwelle aufweist, die höher ist als die Auslöseschwellen der vorliegenden ersten Sicherungen. Falls mehrere zweite Sicherungen vorliegen, ist es ausreichend, wenn die jeweilige zweite Sicherung höher dimensioniert ist als die zugehörige erste Sicherung (sie muss also nicht höher dimensioniert sein als alle ersten Sicherungen). Mit anderen Worten weist dann innerhalb jedes Zweiges die zweite Sicherung eine höhere Auslöseschwelle auf als die erste Sicherung. Ein Vorteil dieser Ausführungsform mit einer höher dimensionierten zweiten Sicherung ist, dass bei einem Fehlerfall in einem der Zweige zunächst die erste Sicherung dieses Zweiges ausgelöst wird und die zweite Sicherung unbeeinträchtigt bleibt. So ist bei einem lokalen Fehlerfall in dem Wechselrichter und/oder Verbraucher in einem der Zweige nur der Austausch der zugehörigen ersten Sicherung innerhalb des Pufferkreises nötig. Besonders zweckmäßig kann die Auslöseschwelle der jeweiligen zweiten Sicherung um wenigstens einen Faktor 2 höher liegen als die Auslöseschwelle der zugehörigen ersten Sicherung.

Alternativ zu den vorab beschriebenen Ausführungsformen ist es aber auch möglich, dass gar keine zweite Sicherung vorliegt, dass also mit anderen Worten innerhalb des Gleichspannungszwischenkreises nur die ersten Sicherungen vorhanden sind, die innerhalb der jeweiligen Pufferkreise liegen, und dass keine zusätzlichen Sicherungen außerhalb der Pufferkreise vorhanden sind. Bei einem Fehlerfall in einem der ersten Zwischenkreiskondensatoren kann dann eine zentrale Sicherung der Stromrichteranordnung auslösen, beispielsweise eine zentrale Sicherung zwischen einer Netzeinspeisung und einem übergeordneten Wechselspannungsnetz, von dem aus der Gleichspannungszwischenkreis elektrisch versorgt wird.

Der jeweilige zweite Zwischenkreiskondensator weist zweckmäßig eine geringere Kapazität auf als der dem jeweiligen Stromrichter zugeordnete erste Zwischenkreiskondensator. Dabei schließt der räumlich größere Pufferkreis eines jeweiligen Zweiges die zugehörige erste Sicherung mit ein, während diese erste Sicherung jeweils außerhalb des räumlich engeren Kommutierungskreises liegt. Die Kapazität des jeweiligen zweiten Zwischenkreiskondensators kann dabei sogar wesentlich geringer sein als die Kapazität des zugehörigen ersten Zwischenkreiskondensators. Beispielsweise kann sie um wenigstens einen Faktor 10 und insbesondere sogar um wenigstens einen Faktor 100 niedriger liegen. Durch diese stark unterschiedliche Dimensionierung von erstem und zweitem Zwischenkreiskondensator wird erreicht, dass bei einem Umladen der zweiten Zwischenkreiskondensatoren (z.B. im Fehlerfall) die außerhalb des jeweiligen Kommutierungskreises liegenden zweiten Sicherungen nicht ausgelöst werden. So ist es allgemein vorteilhaft, wenn die in den zweiten Zwischenkreiskondensatoren gespeicherte Ladung nicht ausreichend ist, um bei einem Kurzschluss die zugehörigen ersten Sicherungen auszulösen. Hierdurch kann eine unnötige Schädigung dieser ersten Sicherungen vermieden werden. Diese lösen vielmehr nur aus, wenn eine Umladung des entsprechend wesentlich höher dimensionierten ersten Zwischenkreiskondensators erfolgt. Bezüglich des jeweiligen ersten Zwischenkreiskondensators liegt die zugehörige erste Sicherung aber innerhalb des Pufferkreises, so dass nur die erste Sicherung des jeweils betroffenen Zweiges ausgelöst wird und nicht die entsprechende erste Sicherung aus einem benachbarten Zweig.

Nachfolgend wird die Erfindung anhand einiger bevorzugter Ausführungsbeispiele unter Bezugnahme auf die angehängten Zeichnungen beschrieben, in denen
- Figur 1: ein schematisches Ersatzschaltbild einer Stromrichteranordnung nach dem Stand der Technik zeigt,
- Figur 2: eine weitere beispielhafte Stromrichteranordnung nach dem Stand der Technik zeigt,
- Figur 3: eine Stromrichteranordnung nach einem Beispiel der Erfindung zeigt und
- Figur 4: eine Stromrichteranordnung nach einem weiteren Beispiel der Erfindung zeigt.

In den Figuren sind gleiche oder funktionsgleiche Elemente mit gleichen Bezugszeichen versehen.

In Figur 1 ist ein schematisches Ersatzschaltbild einer Stromrichteranordnung 1 nach dem Stand der Technik gezeigt. Es handelt sich dabei um eine Frequenzumrichteranordnung, bei der mehrere Stromrichter SR1, SR2 und SR3 mit einem gemeinsamen Gleichspannungszwischenkreis 10 verbunden sind. Die einzelnen Stromrichter SR1, SR2 und SR3 sind hier als Wechselrichter ausgebildet und wandeln die Gleichspannung des Gleichspannungszwischenkreises 10 jeweils in eine Wechselspannung um. Bei der gezeigten Anordnung ist jeder der drei Wechselrichter SR1, SR2, SR3 mit einem zugeordneten Verbraucher M1, M2, M3 verbunden, wobei der jeweilige Verbraucher M1, M2, M3 von dem Wechselrichter SR1, SR2, SR3 mit einer passenden Wechselspannung versorgt wird. Bei diesen drei Verbrauchern M1, M2, M3 kann es sich beispielsweise um Antriebsmotoren einer industriellen Fertigungsanlage handeln.

Der Gleichspannungszwischenkreis 10 umfasst zwei Phasen, nämlich eine erste Phase DCP mit positiver Polarität und eine zweite Phase DCN mit negativer Polarität. Der Gleichspannungszwischenkreis 10 wird durch eine hier nicht dargestellte übergeordnete Netzeinspeisung mit Gleichstrom versorgt, wobei die Netzeinspeisung insbesondere einen Gleichrichter umfasst, der wiederum an ein Wechselspannungsnetz angeschlossen ist. Somit liegt zwischen den beiden Phasen DCP und DCN eine Gleichspannung an. Die einzelnen Wechselrichter SR1, SR2, SR3 sind jeweils über separate Paare von Anschlussknoten mit den beiden Phasen verbunden, also z.B. der erste Wechselrichter SR1 über die beiden Anschlussknoten KN1 und KP1. Dadurch sind in diesem Beispiel drei eigenständige Zweige Z1, Z2 und Z3 gebildet. Es können allgemein auch mehr oder weniger solche Zweige vorhanden sein. Innerhalb jedes Zweigs ist dem jeweiligen Wechselrichter SR1, SR2, SR3 ein Zwischenkreiskondensator C1, C2, C3 parallelgeschaltet. So bildet z.B. im ersten Zweig Z1 der Zwischenkreiskondensator C1 zusammen mit dem ersten Wechselrichter SR1 einen Pufferkreis PK aus, wodurch die an dem ersten Wechselrichter SR1 anliegende Gleichspannung geglättet wird. Der Pufferkreis PK ist durch eine fettgedruckte Linie gekennzeichnet. Zwischen dem Zwischenkreiskondensator C1 und einem der zugehörigen Anschlussknoten - hier z.B. KP1 - ist eine Sicherung S1 zwischengeschaltet. Bei einem Fehler F, also z.B. einem Kurzschluss, im ersten Zweig Z1 kann diese Sicherung S1 auslösen und so den betroffenen Stromrichter SR1 und den daraus gespeisten Verbraucher M1 vom Netz trennen. Die elektrische Anordnung in den anderen Zweigen ist entsprechend.

Ein Problem bei dieser Anordnung nach dem Stand der Technik ist, dass bei dem beispielhaft dargestellten Fehler F im ersten Zweig Z1 auch die entsprechenden Sicherungen S2 und S2 in den benachbarten Zweigen Z2 und Z3 ungewollt auslösen können, auch wenn diesen Zweigen Z2, Z3 gar kein Fehler aufgetreten ist. Wenn im ersten Zweig Z1 an der durch den Pfeil gekennzeichneten Stelle ein Fehler F auftritt, dann entlädt sich der Zwischenkreiskondensator C1 dieses Zweiges Z1 in die Fehlerstelle. Zusätzlich entladen sich aber auch die entsprechenden Zwischenkreiskondensatoren C2 und C3 der benachbarten Zweige Z2, Z3 in die Fehlerstelle. Dabei fließt im zweiten Zweig Z2 der Entladungsstrom i₂, und im dritten Zweig Z3 fließt der Entladungsstrom i₃, und über die Sicherung S1 des ersten Zweiges Z1 fließt die Summe der beiden Entladungsströme i₂, i₃. Vor allem dann, wenn die benachbarten Sicherungen S2 und S3 für einen vergleichsweise niedrigen Bemessungsstrom dimensioniert sind, können durch diese Entladungsvorgänge bei einem Fehler im ersten Zweig Z1 auch die Sicherungen S2 und/oder S3 auslösen. Ein derartiges fälschliches Auslösen einer Sicherung S2, S3 aus einem Nachbarzweig Z2, Z3 ist unerwünscht, da hierdurch auch eine Reparatur bzw. ein Austausch einer Sicherung S2, S3 in einem Zweig Z2, Z3 nötig wird, der von dem ursprünglichen Fehler F gar nicht betroffen war. In ähnlicher Weise können Sicherungen S1, S2, S3 der einzelnen Zweige Z1, Z2, Z3 fälschlich auslösen, wenn ein Fehler in einem weiter außenliegenden, hier nicht dargestellten Bereich des Gleichspannungszwischenkreises 10 auftritt. Um das beschriebene Problem der Fehlauslösungen von Sicherungen einzudämmen, werden bei solchen herkömmlichen Anordnungen meist nur Stromrichter SR1, SR2, SR3 und Verbraucher M1, M2, M3 mit untereinander relativ ähnlichen Nennleistungen an einem gemeinsamen Gleichspannungszwischenkreis betrieben.

In Figur 2 ist ein entsprechendes Ersatzschaltbild für eine weitere Stromrichteranordnung 1 gezeigt. Auch hier ist die Stromrichteranordnung 1 eine Frequenzumrichteranordnung mit mehreren Stromrichtern SR1, SR2, SR3, welche jeweils als Wechselrichter ausgebildet sind. Auch die Aufteilung in drei separate Zweige Z1, Z2, Z3 ist entsprechend. Im Unterschied zu der herkömmlichen Anordnung der Figur 1 ist hier jedoch in jedem der Zweige Z1, Z2, Z3 eine erste Sicherung S12, S22, S32 zwischen den jeweiligen Zwischenkreiskondensator C1, C2, C3 und den zugehörigen Stromrichter SR1, SR2, SR3 geschaltet. Diese erste Sicherung S12, S22, S32 befindet sich also innerhalb des jeweiligen Pufferkreises PK. Rein optional kann sich außerhalb des jeweiligen Pufferkreises PK noch eine zweite Sicherung S1, S2, S3 befinden, welche dann den Sicherungen aus der Anordnung der Figur 1 entspricht. Dies ist jedoch nicht zwingend erforderlich. Wesentlich ist, dass sich in jedem Zweig Z1, Z2, Z3 die jeweilige erste Sicherung S12, S22, S32 innerhalb des jeweiligen Pufferkreises PK befindet. Diese erste Sicherung S12, S22, S32 weist insbesondere eine niedrigere Auslöseschwelle auf als die optional vorliegende zweite Sicherung S1, S2, S3 des jeweiligen Zweiges Z1, Z2, Z3, so ist also z.B. die Auslöseschwelle der ersten Sicherung S12 niedriger als die Auslöseschwelle der zweiten Sicherung S1.

Bei der Anordnung des Beispiels der Figur 2 wird bei einem Fehler F im ersten Zweig Z1 die erste Sicherung S12 nicht durch den Strom aus den Zwischenkreiskondensatoren C2 und C3 der benachbarten Zweige Z2, Z3 ausgelöst, sondern vor allem durch den Strom aus dem Zwischenkreiskondensator C1 des zugehörigen Zweigs Z1. Dadurch, dass in jedem Zweig Z1, Z2, Z3 die empfindlichste Sicherung S12, S22, S32 innerhalb des Pufferkreises PK angeordnet wird, löst zunächst diese Sicherung S12 aus und trennt die betroffene Fehlerstelle von den übrigen Zweigen, bevor ein wesentlicher Stromfluss aus den Zwischenkreiskondensatoren C2, C3 der benachbarten Zweige Z2, Z3 erfolgen kann. So wird eine unerwünschte Schädigung von Sicherungen S22, S32 in benachbarten Zweigen Z2, Z3 wirksam vermieden. Auch die optional vorliegenden zweiten Sicherungen S1, S2, S3, welche hier außerhalb des jeweiligen Pufferkreises PK liegen, sind wenig gefährdet, da sie einerseits höher dimensioniert sind und andererseits der Stromfluss in diesem Bereich bei einem Fehler F sehr schnell durch das Auslösen der zugehörigen ersten Sicherung S12, S22, S32 unterbrochen wird. So kann das Ausmaß der nach einem Fehlerfall nötigen Reparaturen wirksam eingeschränkt werden. Außerdem ist es möglich, Anordnungen mit wesentlich stärker unterschiedlichen Nennleistungen und entsprechend unterschiedlichen Nennströmen in den einzelnen Zweigen Z1, Z2, Z3 zu realisieren, ohne dass das Risiko der unerwünschten Auslösung von Sicherungen dabei zu groß wird.

Die außerhalb der jeweiligen Pufferkreise PK liegenden zweiten Sicherungen S1, S2, S3 dienen zum Schutz des jeweils zugeordneten Zwischenkreiskondensators C1, C2 bzw. C3. Wenn deren Ausfallrate entsprechend gering ist, können die zweiten Sicherungen S1, S2, S3 auch ganz entfallen. Stattdessen kann bei einem Fehlerfall in einem der Zwischenkreiskondensatoren C1, C2, C3 z.B. eine hier nicht dargestellte zentrale Sicherung des übergeordneten Gleichspannungszwischenkreises 10 auslösen und/oder es kann eine zentrale Sicherung auf der Wechselspannungsseite einer übergeordneten Netzeinspeisung auslösen.

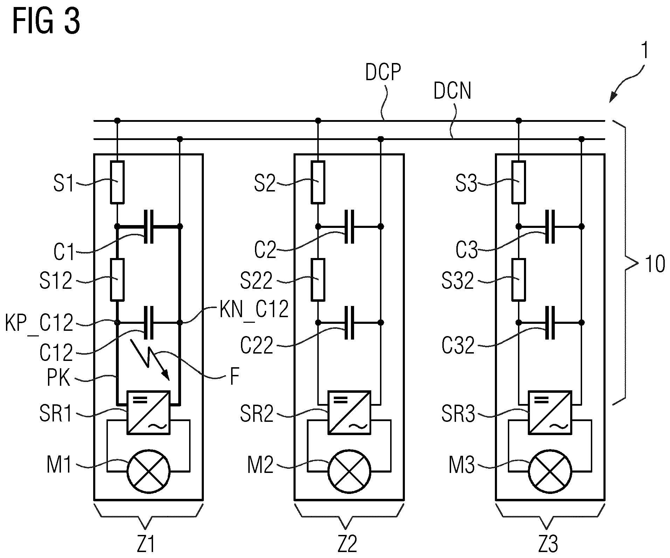

Figur 3 zeigt ein entsprechendes Ersatzschaltbild für eine Stromrichteranordnung 1 nach einem Ausführungsbeispiel der Erfindung. Der grundlegende Aufbau ist ähnlich wie bei der Stromrichteranordnung der Figur 2. Im Unterschied hierzu ist in jedem Zweig Z1, Z2, Z3 noch ein zusätzlicher zweiter Zwischenkreiskondensator C12, C22, C32 angeordnet. Dieser zweite Zwischenkreiskondensator C12, C22, C32 ist innerhalb des zugeordneten Pufferkreises PK dem jeweiligen Stromrichter SR1, SR2, SR3 parallelgeschaltet. Die zweiten Zwischenkreiskondensatoren C12, C22, C32 sind jeweils über zwei zugehörige Anschlussknoten verbunden (z.B. die Anschlussknoten KP_C12 und KN_C12 für den Zwischenkreiskondensator C12), wobei einer dieser Anschlussknoten (hier KP_C12) zwischen der zugeordneten ersten Sicherung S1 und dem zugeordneten Stromrichter SR1 angeordnet ist. Mit anderen Worten ist der zweite Zwischenkreiskondensator C12, C22, C32 jeweils auf der Stromrichter-Seite der zugehörigen ersten Sicherung S12, S22, S32 angeordnet. Der zweite Zwischenkreiskondensator C12, C22, C32 weist jeweils eine geringere Kapazität auf als der zugehörige erste Zwischenkreiskondensator C1, C2, C3 des jeweiligen Zweiges Z1, Z2, Z3. Definitionsgemäß verläuft somit der sogenannte Pufferkreis PK über den ersten Zwischenkreiskondensator C1, C2, C3 und nicht über den zweiten Zwischenkreiskondensator C12, C22, C32, und die jeweilige erste Sicherung S12, S22, S32 liegt innerhalb des gebildeten Pufferkreises PK. Der höher dimensionierte erste Zwischenkreiskondensator C1, C2, C3 erfüllt in jedem Zweig Z1, Z2, Z3 die Funktionalität der Glättung der Gleichspannung innerhalb des Pufferkreises PK, während der jeweilige zweite Zwischenkreiskondensator C12, C22, C32 im Wesentlichen dazu dient, Überspannungen im Zusammenhang mit den Schaltvorgängen im jeweiligen Stromrichter SR1,SR2,SR3 zu reduzieren. Hierdurch wird eine Problematik adressiert, die durch die erfindungsgemäße Anordnung der ersten Sicherungen S12, S22, S32 innerhalb des jeweiligen Pufferkreises PK entstehen kann: Aufgrund der zusätzlichen Induktivität durch die Platzierung der ersten Sicherung S12, S22, S32 innerhalb des jeweiligen Pufferkreises PK können nämlich bei den Schaltvorgängen deutlich höhere Überspannungen entstehen, als dies bei der herkömmlichen Anordnung der Figur 1 der Fall ist, wenn diese mit sehr niedrigen Gesamtinduktivitäten in den einzelnen Pufferkreisen umgesetzt wird. Dieser grundlegende Nachteil der erfindungsgemäßen Anordnung der ersten Sicherungen S12, S22, S32 kann durch die zusätzlichen zweiten Zwischenkreiskondensatoren C12, C22, C32 wirksam abgemildert oder sogar aufgehoben werden.

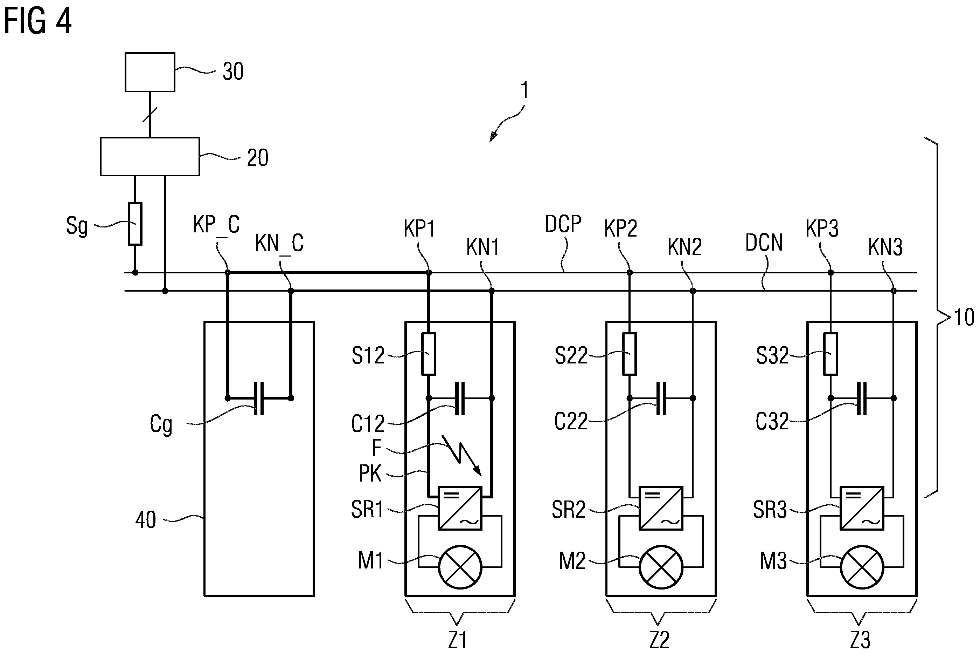

Figur 4 zeigt ein entsprechendes Ersatzschaltbild für eine Stromrichteranordnung 1 nach einem weiteren Ausführungsbeispiel der Erfindung. Auch hier liegen mehrere Zweige Z1, Z2, Z3 vor, in denen jeweils ein Stromrichter SR1, SR2, SR3 (auch hier als Wechselrichter ausgebildet) angeordnet ist. Im Unterschied zu den vorhergehenden beiden Beispielen ist der erste Zwischenkreiskondensator C1, C2, C3 zur Glättung der Gleichspannung jedoch nicht innerhalb der einzelnen Zweige Z1, Z2, Z3 angeordnet, sondern in einem separaten Kondensatormodul 40, welches über separate Anschlussknoten KP_C und KN_C mit dem Gleichspannungszwischenkreis 10 verbunden ist. In dem Kondensatormodul 40 ist ein übergeordneter erster Zwischenkreiskondensator C_{g} angeordnet, welcher zur Glättung der Gleichspannung in allen vorliegenden Zweigen Z1, Z2, Z3 dient. Auch hier sind innerhalb der einzelnen Zweigen Z1, Z2, Z3 zusätzliche zweite Zwischenkreiskondensatoren C12, C22, C32 vorhanden, welche jedoch wesentlich kleinere Kapazitäten aufweisen als der übergeordnete erste Zwischenkreiskondensator C_{g}. Daher erstreckt sich für jeden Stromrichter SR1, SR2, SR3 der Pufferkreis PK - welcher als der zugehörige Stromkreis zur Ladungspufferung mit der größten Kapazität definiert ist - über den außerhalb des jeweiligen Zweigs Z1, Z2, Z3 liegenden ersten Zwischenkreiskondensator C_{g}. Beispielhaft ist der entsprechende Pufferkreis PK für den ersten Zweig Z1 durch eine fettgedruckte Linie markiert. Die Pufferkreise der übrigen Zweige Z2, Z3 ergeben sich entsprechend, so dass die einzelnen Pufferkreise im Bereich des übergeordneten ersten Zwischenkreiskondensators C_{g} räumlich überlappen.

Auch beim Beispiel der Figur 4 weist jeder der einzelnen Zweige Z1, Z2, Z3 eine zugehörige erste Sicherung S12, S22, S32 auf, welche innerhalb des jeweiligen Pufferkreis PK angeordnet ist. So wird auch hier erreicht, dass bei einem Fehler F in einem der Zweige (hier z.B. in Z1) die zugehörige Sicherung S12 auslöst und den betroffenen Zweig Z1 elektrisch trennt, wobei sich der übergeordnete erste Zwischenkreiskondensator C_{g} in die Fehlerstelle entlädt. Dabei wird eine Vorschädigung der Sicherungen S22, S32 in den benachbarten Zweigen Z2, Z3 wirksam vermieden, da hier keine wesentlichen Entladungsströme fließen. Ähnlich wie beim Beispiel der Figur 3 sind auch hier die zweiten Zwischenkreiskondensatoren C12, C22, C32 bezüglich ihrer Kapazität kleiner dimensioniert als der übergeordnete erste Zwischenkreiskondensator C_{g} und dienen im wesentlichen dazu, Überspannungen aufgrund der Schaltvorgänge in den einzelnen Stromrichtern SR1, SR2, SR3 kurzfristig auszugleichen.

Optional kann bei einer solchen Ausführung noch eine übergeordnete zweite Sicherung S_{g} vorliegen. Ähnlich wie beim Beispiel der Figur 3 liegt diese zweite Sicherung S_{g} außerhalb der einzelnen Pufferkreise PK, und ihre Auslöseschwelle ist höher als die Auslöseschwellen der jeweiligen ersten Sicherungen S12, S22, S32. Im Unterschied zum vorhergehenden Beispiel ist hier jedoch nur eine solche zweite Sicherung S_{g} vorhanden, die hier als übergeordnete Sicherung für alle Zweige Z1, Z2, Z3 dient. Entsprechend ist sie zwischen der Gesamtzeit der Anschlussknoten KN1, KP1, KN2, KP2, KN3, KP3 der Stromrichter SR1, SR2, SR3 und einer übergeordneten Netzeinspeisung 20 verschaltet. Die übergeordnete Netzeinspeisung 20 dient zur Versorgung des gesamten Gleichspannungszwischenkreises 10 mit einer Gleichspannung. Sie kann dazu insbesondere einen Gleichrichter aufweisen und aus einem Wechselspannungsnetz 30 gespeist werden.

Die beschriebenen Ausführungsformen sind nur beispielhaft zu verstehen. In ähnlicher Weise können die Vorteile der Erfindung auch mit anderen Stromrichteranordnungen realisiert sein, bei denen andere Arten von Stromrichtern eingesetzt werden. So können die einzelnen Stromrichter beispielsweise alternativ als Gleichspannungswandler ausgebildet sein, welche durch einen gemeinsamen Gleichspannungszwischenkreis gespeist werden. Oder aber es kann sich um eine unterbrechungsfreie Stromversorgung mit einem übergeordneten Gleichspannungskreis handeln. Zudem können Zweige Z1, Z2, Z3 analog der Ausführungsform nach Figur 3, die einen ersten Zwischenkreiskondensator C1, C2, C3 beinhalten, und Zweige Z1, Z2, Z3 entsprechend Figur 4, die keinen ersten Zwischenkreiskondensator C1, C2, C3 beinhalten, beliebig miteinander parallelgeschaltet werden. In diesem Fall können die Zweige Z1, Z2, Z3 aus den Ausführungsformen nach Figur 3, die einen ersten Zwischenkreiskondensator C1, C2, C3 beinhalten, die Funktionalität des Kondensatormoduls 40 aus Figur 4 mit übernehmen.

## Patentansprüche

1. Stromrichteranordnung (1) umfassend
- einen Gleichspannungszwischenkreis (10) mit einer ersten Phase (DCP) und einer zweiten Phase (DCN),
- eine Mehrzahl von Stromrichtern (SR1, SR2, SR3), welche jeweils einzeln zwischen der ersten Phase (DCP) und der zweiten Phase (DCN) verschaltet sind, so dass den einzelnen Stromrichtern (SR1, SR2, SR3) jeweils ein separates Paar von Anschlussknoten (KN1, KP1, KN2, KP2, KN3, KP3) zugeordnet ist,
- wenigstens einen ersten Zwischenkreiskondensator (C1, C2, C3, C_{g}), welcher zwischen der ersten Phase (DCP) und der zweiten Phase (DCN) verschaltet ist, so dass die Stromrichter mit einem ersten Zwischenkreiskondensator (C1, C2, C3, C_{g}) jeweils einen Pufferkreis (PK) ausbilden,
**dadurch gekennzeichnet, dass**
- zu jedem Stromrichter eine zugeordnete erste Sicherung (S12, S22, S32), welche innerhalb des dem jeweiligen Stromrichter (SR1, SR2, SR3) zugeordneten Pufferkreises (PK) in Serie mit dem jeweiligen Stromrichter (SR1, SR2, SR3) verschaltet ist,
- und für die einzelnen Stromrichter (SR1, SR2, SR3) jeweils einen zugeordneten zweiten Zwischenkreiskondensator (C12, C22, C32), welcher innerhalb des zugeordneten Pufferkreises (PK) dem jeweiligen Stromrichter (SR1, SR2, SR3) parallelgeschaltet ist, wobei die zweiten Zwischenkreiskondensatoren (C12, C22, C32) jeweils über zwei zugehörige Anschlussknoten (KN_C12, KP_C12) verbunden sind, von denen einer (KP_C12) zwischen der ersten Sicherung (S12, S22, S32) und dem Stromrichter (SR1, SR2, SR3) angeordnet ist.

2. Stromrichteranordnung (1) nach Anspruch 1, welche als Frequenzumrichteranordnung ausgebildet ist, wobei die einzelnen Stromrichter (SR1, SR2, SR3) jeweils als Wechselrichter ausgebildet sind.

3. Stromrichteranordnung (1) nach Anspruch 1 oder 2, bei welcher die den jeweiligen Stromrichtern (SR1, SR2, SR3) zugeordneten ersten Sicherungen (S12, S22, S32) jeweils eine Auslöseschwelle aufweisen, wobei sich zumindest zwei der Sicherungen (S12, S22, S32) bezüglich ihrer Auslöseschwelle um wenigstens einen Faktor 5 unterscheiden.

4. Stromrichteranordnung (1) nach einem der Ansprüche 1 bis 3, bei welcher den Stromrichtern (SR1, SR2, SR3) jeweils ein eigener erster Zwischenkreiskondensator (C1, C2, C3) zugeordnet ist, so dass durch den jeweiligen Stromrichter (SR1, SR2, SR3) und den zugeordneten Zwischenkreiskondensator (C1, C2, C3) jeweils ein eigenständiger Pufferkreis (PK) ausgebildet ist.

5. Stromrichteranordnung (1) nach einem der Ansprüche 1 bis 3, welche einen übergeordneten Zwischenkreiskondensator (C_{g}) umfasst, der über separate Anschlussknoten (KN_C, NP_C) zwischen der ersten Phase (DCP) und der zweiten Phase (DCN) verschaltet ist.

6. Stromrichteranordnung (1) nach einem der vorhergehenden Ansprüche, welche wenigstens eine zweite Sicherung (S1, S2, S3) umfasst, die außerhalb der einzelnen Pufferkreise (PK) angeordnet ist.

7. Stromrichteranordnung (1) nach Anspruch 6, bei welcher die wenigstens eine zweite Sicherung (S1, S2, S3) eine Auslöseschwelle aufweist, die wenigstens einen Faktor 2 höher ist als die Auslöseschwellen der vorhandenen ersten Sicherungen (S12, S22, S32).

8. Stromrichteranordnung (1) nach Anspruch 6 oder 7, welche zu dem jeweiligen Stromrichter (SR1, SR2, SR3) eine zugeordnete zweite Sicherung (S1, S2, S3) aufweist, welche elektrisch zwischen dem zugehörigen Pufferkreis (PK) und einem der zugehörigen Anschlussknoten (KN1, KP1, KN2, KP2, KN3, KP3) angeordnet ist.

9. Stromrichteranordnung (1) nach einem der Ansprüche 1 bis 7, welche eine übergeordnete Netzeinspeisung (20) aufweist und welche eine übergeordnete zweite Sicherung (S_{g}) aufweist, welche elektrisch zwischen der Gesamtheit der Anschlussknoten (KN1,KP1,KN2,KP2,KN3,KP3) der Stromrichter (SR1,SR2,SR3) und der übergeordneten Netzeinspeisung (20) angeordnet ist.

10. Stromrichteranordnung (1) nach einem der vorhergehenden Ansprüche, bei welcher die zweiten Zwischenkreiskondensatoren (C12, C22, C32) jeweils eine geringere Kapazität aufweisen als der dem jeweiligen Stromrichter (SR1, SR2, SR3) zugeordnete erste Zwischenkreiskondensator (C1, C2, C3).

11. Stromrichteranordnung (1) nach einem der vorhergehenden Ansprüche, bei welcher die in den zweiten Zwischenkreiskondensatoren (C12, C22, C32) gespeicherte Ladung nicht ausreichend ist, um bei einem Kurzschluss die zugehörigen ersten Sicherungen (S12, S22, S32) auszulösen.

## Claims

1. Power converter arrangement (1), comprising
- a DC link (10) with a first phase (DCP) and a second phase (DCN),
- a plurality of power converters (SR1, SR2, SR3) which are each individually connected between the first phase (DCP) and the second phase (DCN) so that a separate pair of connection nodes (KN1, KP1, KN2, KP2, KN3, KP3) is associated with each of the individual power converters (SR1, SR2, SR3),
- at least one first DC link capacitor (C1, C2, C3, C_{g}), which is connected between the first phase (DCP) and the second phase (DCN) so that the power converters each form a buffer circuit (PK) with a first DC link capacitor (C1, C2, C3, C_{g}),
**characterised in that**
- a first fuse (S12, S22, S32) associated with each power converter, said fuse being connected within the buffer circuit (PK) associated with each power converter (SR1, SR2, SR3), in series with the respective power converter (SR1, SR2, SR3),
- and for each individual power converter (SR1, SR2, SR3), an associated second DC link capacitor (C12, C22, C32) which is connected in parallel with the respective power converter (SR1, SR2, SR3) within the associated buffer circuit (PK), wherein the second DC link capacitors (C12, C22, C32) are each connected via two associated connection nodes (KN_C12, KP_C12) of which one (KP_C12) is arranged between the first fuse (S12, S22, S32) and the power converter (SR1, SR2, SR3).

2. Power converter arrangement (1) according to claim 1, which is configured as a frequency converter arrangement, wherein the individual power converters (SR1, SR2, SR3) are each configured as inverters.

3. Power converter arrangement (1) according to claim 1 or 2, wherein the first fuses (S12, S22, S32) associated with the respective power converters (SR1, SR2, SR3) each have a tripping threshold, wherein at least two of the fuses (S12, S22, S32) provided differ with regard to their tripping threshold by at least a factor of 5.

4. Power converter arrangement (1) according to one of claims 1 to 3, wherein a dedicated first DC link capacitor (C1, C2, C3) is associated with each of the power converters (SR1, SR2, SR3) so that, by way of the respective power converter (SR1, SR2, SR3) and the associated DC link capacitor (C1, C2, C3), an independent buffer circuit (PK) is formed.

5. Power converter arrangement (1) according to one of claims 1 to 3, which comprises a higher-level DC link capacitor (C_{g}) which is connected via separate connection nodes (KN_C, NP_C) between the first phase (DCP) and the second phase (DCN).

6. Power converter arrangement (1) according to one of the preceding claims, which comprises at least one second fuse (S1, S2, S3) that is arranged outside the individual buffer circuits (PK).

7. Power converter arrangement (1) according to claim 6, in which the at least one second fuse (S1, S2, S3) has a tripping threshold that is at least a factor of 2 higher than the tripping thresholds of the existing first fuses (S12, S22, S32).

8. Power converter arrangement (1) according to claim 6 or 7, which has a second fuse (S1, S2, S3) which is associated with each power converter (SR1, SR2, SR3) and is arranged electrically between the associated buffer circuit (PK) and one of the associated connection nodes (KN1, KP1, KN2, KP2, KN3, KP3).

9. Power converter arrangement (1) according to one of claims 1 to 7, which has a higher-level mains feed (20) and a higher-level second fuse (S_{g}) which is electrically arranged between the entirety of the connection nodes (KN1, KP1, KN2, KP2, KN3, KP3) of the power converter (SR1, SR2, SR3) and the higher-level mains feed (20).

10. Power converter arrangement (1) according to one of the preceding claims, in which each of the second DC link capacitors (C12, C22, C32) has a lower capacitance than the first DC link capacitor (C1, C2, C3) associated with the respective power converter (SR1, SR2, SR3).

11. Power converter arrangement (1) according to one of the preceding claims, in which the charge stored in the second DC link capacitors (C12, C22, C32) is not sufficient to trip the associated first fuses (S12, S22, S32) in the event of a short-circuit.

## Revendications

1. Agencement (1) de convertisseur comprenant
- un circuit (10) intermédiaire à tension continue ayant une première phase (DCP) et une deuxième phase (DCN),
- une pluralité de convertisseurs (SR1, SR2, SR3), qui sont montés respectivement individuellement entre la première phase (DCP) et la deuxième phase (DCN), de manière à ce que, au convertisseur (SR1, SR2, SR3) individuel, soit affectée respectivement une paire distincte de nœuds (KN1, KP1, KN2, KP2, KN3, KP3) de connexion,
- au moins un premier condensateur (C1, C2, C3, C_{g}) de circuit intermédiaire, qui est monté entre la première phase (DCP) et la deuxième phase (DCN), de manière à ce que les convertisseurs forment avec un premier condensateur (C1, C2, C3, C_{g}) de circuit intermédiaire respectivement un circuit (PK) tampon,
**caractérisé en ce qu'**
- un premier fusible (S12, S22, S32), qui est affecté à chaque convertisseur et qui est monté à l'intérieur du circuit (PK) tampon, associé au convertisseur (SR1, SR2, SR3) respectif, en série avec le convertisseur (SR1, SR2, SR3) respectif,
- et pour les divers convertisseurs (SR1, SR2, SR3), respectivement un deuxième condensateur (C12, C22, C32) de circuit intermédiaire associé, qui est monté en parallèle à l'intérieur du circuit (PK) tampon associé du convertisseur (SR1, SR2, SR3) respectif, dans lequel les deuxièmes condensateurs (C12, C22, C32) de circuit intermédiaire sont reliés respectivement par deux nœuds (KN_C12, KP_C12) de connexion associés, dont l'un (KP_C12) est disposé entre le . premier fusible (S12, S22, S32) et le convertisseur (SR1, SR2, SR3).

2. Agencement (1) de convertisseur suivant la revendication 1, qui est constitué en agencement de convertisseur de fréquence, dans lequel les divers convertisseurs (SR1, SR2, SR3) sont constitués respectivement en onduleur.

3. Agencement (1) de convertisseur suivant la revendication 1 ou 2, dans lequel les premiers fusibles (S12, S22, S32) associés au convertisseur (SR1, SR2, SR3) respectif ont chacun un seuil de déclenchement, dans lequel au moins deux des fusibles (S12, S22, S32) se différencient en ce qui concerne leur seuil de déclenchement d'au moins un facteur de 5.

4. Agencement (1) de convertisseur suivant l'une des revendications 1 à 3, dans lequel, au convertisseur (SR1, SR2, SR3), est associé respectivement un premier condensateur (C1, C2, C3) propre de circuit intermédiaire, de manière à former par le convertisseur (SR1, SR2, SR3) respectif et le condensateur (C1, C2, C3) de circuit intermédiaire associé, respectivement un circuit (PK) tampon indépendant.

5. Agencement (1) de convertisseur suivant l'une des revendications 1 à 3, qui comprend un condensateur (C_{g}) de circuit intermédiaire supérieur hiérarchiquement, qui est monté par des nœuds (KN_C, NP_C) de connexion distincts entre la première phase (DCP) et la deuxième phase (DCN).

6. Agencement (1) de convertisseur suivant l'une des revendications précédentes, qui comprend au moins un deuxième fusible (S1, S2, S3), qui est disposé à l'extérieur des circuits (PK) tampon individuels. .

7. Agencement (1) de convertisseur suivant la revendication 6, dans lequel le au moins un deuxième fusible (S1, S2, S3) a un seuil de déclenchement, qui est plus haut d'au moins un facteur de 2 que les seuils de déclenchement des premiers fusibles (S12, S22, S32) présents.

8. Agencement (1) de convertisseur suivant la revendication 6 ou 7, qui, pour le convertisseur (SR1, SR2, SR3) respectif, a un deuxième fusible (S1, S2, S3) associé, qui est monté électriquement entre le circuit (PK) tampon associé et l'un des nœuds (KN1, KP1, KN2, KP2, KN3, KP3) de connexion associés.

9. Agencement (1) de convertisseur suivant l'une des revendications 1 à 7, qui a une alimentation (20) de secteur supérieure hiérarchiquement et qui a un deuxième fusible (S_{g}) supérieur hiérarchiquement, qui est monté électriquement entre l'ensemble des nœuds (KN1, KP1, KN2, KP2, KN3, KP3) de connexion des convertisseurs (SR1, SR2, SR3) et l'alimentation (20) de secteur supérieure hiérarchiquement.

10. Agencement (1) de convertisseur suivant l'une des revendications précédentes, dans lequel les deuxièmes condensateurs (C12, C22, C32) de circuit intermédiaire ont chacun une capacité plus petite que celle du premier condensateur (C1, C2, C3) intermédiaire associé au convertisseur (SR1, SR2, SR3) respectif.

11. Agencement (1) de convertisseur suivant l'une des revendications précédentes, dans lequel la charge accumulée dans les deuxièmes condensateurs (C12, C22, C32) de circuit intermédiaire n'est pas suffisante pour déclencher, lors d'un court-circuit, les premiers fusibles (S12, S22, S32) associés. .
